# EUROPEAN PATENT SPECIFICATION

(11) **EP 3 754 214 B1**
(45) Date of publication and mention of the grant of the patent: **12.01.2022**
(21) Application number: 19754879.5
(22) Date of filing: 14.02.2019
(51) Int. Cl.: F16C 32/06, F16C 27/02, B05B 5/04

(54) **SPINDLE DEVICE**
SPINDELVORRICHTUNG
DISPOSITIF DE BROCHE

(30) Priority: 15.02.2018 JP 2018024671
(43) Date of publication of application: 23.12.2020
(73) Proprietor: NSK LTD., Shinagawa-Ku Tokyo 141-8560 (JP)
(72) Inventor: KOBAYASHI, Naoya, Fujisawa-shi, Kanagawa 251-8501 (JP); TAKAHASHI, Atsushi, Fujisawa-shi, Kanagawa 251-8501 (JP); KATSUNO, Yoshiaki, Fujisawa-shi, Kanagawa 251-8501 (JP)
(74) Representative: Grünecker Patent- und Rechtsanwälte PartG mbB
(86) International application number: PCT/JP2019/005400
(87) International publication number: WO 2019/160052

(56) References cited:
- WO-A1-2009/104542
- WO-A1-2017/090729
- JP-A- 2003 278 751
- JP-A- 2006 077 797
- JP-A- 2016 223 553
- JP-A- 2018 021 625

## Description

### Technical Field

The present invention relates to a spindle device using an air turbine drive system.

### Background Art

Spindle devices used in electrostatic coating machines are known. For example, Patent Document 1 discloses a spindle device which includes a journal bearing which supports a rotating shaft in a radial direction, a thrust bearing which supports the rotating shaft in a thrust direction, a housing which supports the rotating shaft via the journal bearing and the thrust bearing, and a cover located on an outer peripheral side of the housing. In the above spindle device, an O-ring is arranged between the housing and the cover to absorb the vibration caused by the high speed rotation and stabilize the operation of the spindle.

In particular, in Patent Document 1, it is described that a position of the O-ring is defined with an axial center of the housing as a starting point so that a front side of the rotating shaft swings greatly, and even when a high-strength material is used for the O-ring, the amount of deformation is increased to sufficiently increase the vibration damping effect.

### Prior Art Document

### Patent Document

Patent Document 1: JP-A-2016-223553

### Summary of Invention

### Technical Problem

The spindle device described in Patent Document 1 aims at a vibration damping effect when a high-strength material is used for the O-ring. Generally, when the whirling of the rotating shaft becomes large due to the vibration, the journal bearing (radial bearing) or the thrust bearing contacts the rotating shaft, resulting in a decrease in the rotating speed.

Since the arrangement of the O-ring with respect to a position of the radial bearing is important for actual vibration damping, not the center of the housing, further improvement is required.

In recent years, from the viewpoint of weight saving and energy saving of the spindle device, there is a strict demand for downsizing, and in some cases, it is not possible to increase a projected area of the radial bearing, so it is necessary to select various structures according to the application.

An object of the invention is to provide a spindle device capable of enhancing a vibration damping effect and stably rotating a rotating shaft while achieving miniaturization.

### Solution to Problem

The above object of the invention is achieved by the following configurations.
(1) A spindle device including:
   a rotating shaft which has a plurality of turbine blades installed in a circumferential direction and is configured to mount a mounting object on a tip;
   a housing which accommodates the rotating shaft;
   a radial bearing which is attached to the housing and floatingly supports the rotating shaft in a non-contact manner with respect to the housing by supplying gas;
   a thrust bearing which is attached to the housing and supports the rotating shaft in a thrust direction with respect to the housing by supplying gas;
   a case which is arranged to surround an outer peripheral surface of the housing; and
   a plurality of O-rings which are arranged between the housing and the case and supports the housing with respect to the case, where:
      the spindle device rotationally drives the rotating shaft by ejecting gas to the plurality of turbine blades;
      a projected area of the radial bearing seen from a radial direction of the rotating shaft is smaller than an area of the thrust bearing seen from an axial direction of the rotating shaft;
         and
      at least one O-ring is arranged between a center of the radial bearing and the center of gravity of the rotating shaft in an axial direction of the rotating shaft.
(2) The spindle device according to (1), where
   the radial bearing and the thrust bearing are cylindrical porous members.

### Advantageous Effects of Invention

According to the spindle device of the invention, while downsizing, the allowable momentum of the O-ring is increased, and thus the vibration damping effect is enhanced and the rotating shaft can be stably rotated.

### Brief Description of Drawings

Fig. 1 is a cross-sectional view of a spindle device according to an embodiment of the invention.
Fig. 2A is a diagram illustrating a projected area of a radial bearing as seen from a radial direction of a rotating shaft and Fig. 2B is a diagram illustrating an area of a thrust bearing as seen from an axial direction of the rotating shaft.
Fig. 3 is a half cross-sectional view of the spindle device of Fig. 1.

### Description of Embodiment

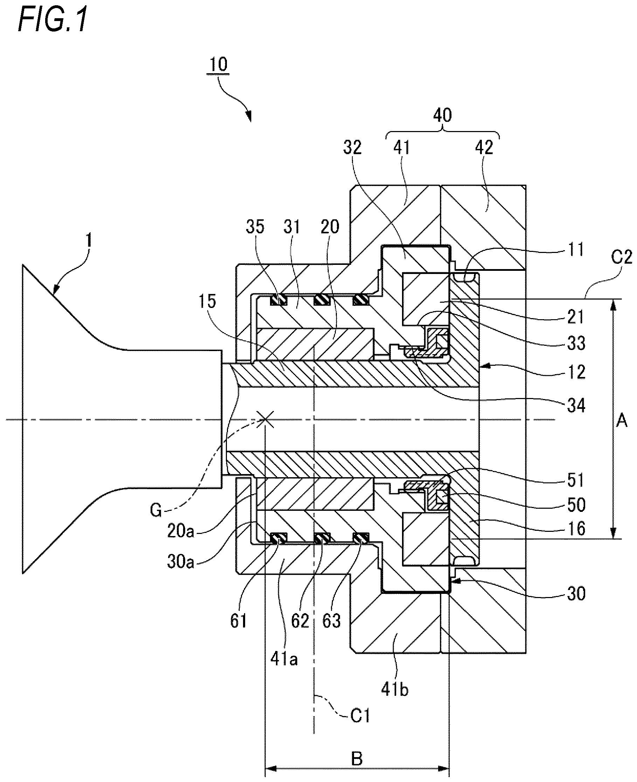

Hereinafter, a spindle device according to an embodiment of the invention will be described in detail with reference to the drawings. In the following description, a left side illustrated in Fig. 1 is called a front side and a right side is called a rear side.

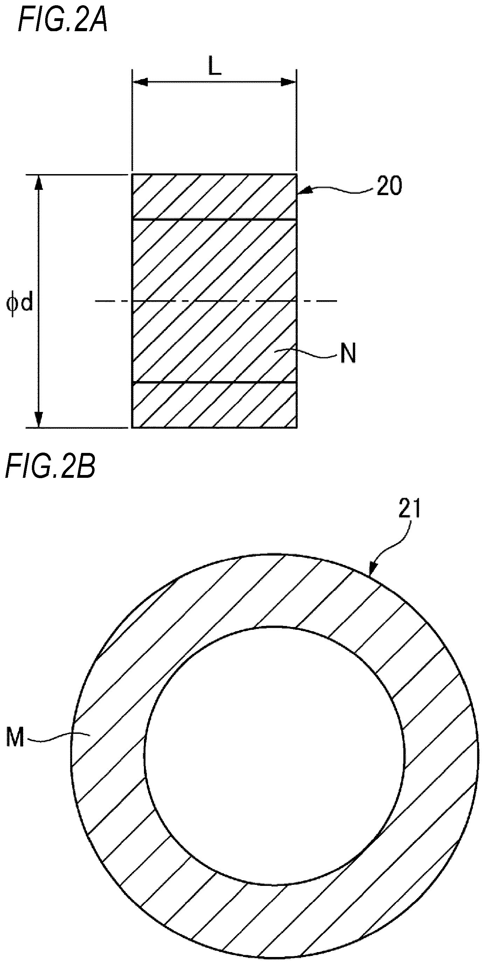

As illustrated in Figs. 1 and 2, a spindle device 10 of the embodiment is an air turbine drive type spindle device used for an electrostatic coating machine. The spindle device 10 mainly includes a rotating shaft 12 provided with a plurality of turbine blades 11 in a circumferential direction, a radial bearing 20, which is a static pressure gas bearing that supports the rotating shaft 12 in the radial direction, a thrust bearing 21 which is a static pressure gas bearing that supports the rotating shaft 12 in a thrust direction, a magnet 50 which attracts the rotating shaft 12 in the thrust direction, a housing 30 which accommodates the rotating shaft 12, and a case 40 arranged to surround an outer peripheral surface of the housing 30.

The rotary shaft 12 includes a cylindrical portion 15 with a bell cup (mounting object) 1, which is used for atomizing and spraying paint, attached to a tip side and a disk portion 16 extending radially outward from a rear end of the cylindrical portion 15.

The plurality of turbine blades 11 are formed by processing an outer peripheral surface of the disk portion 16.

The housing 30 includes a cylindrical part 31 provided around the cylindrical portion 15 of the rotating shaft 12 and having the radial bearing 20 attached to an inner peripheral surface thereof and a disk part 32 provided in front of the disk portion 16 of the rotating shaft 12 and extending radially outward from a rear end of the cylindrical part 31. In the disk part 32, an annular groove 33 having a U-shaped cross section (rectangular cross section) is formed to open rearward to accommodate the thrust bearing 21.

The case 40 includes a front case 41 and a rear case 42. The front case 41 includes a small diameter portion 41a provided around the cylindrical part 31 of the housing 30 and a large diameter portion 41b provided around the disk part 32 of the housing 30 and is formed in a hollow and stepped shape. The rear case 42 is also formed in a hollow shape and is fastened and fixed to the rear end surface of the front case 41 by a bolt (not illustrated).

The radial bearing 20 is a cylindrical porous member and faces an outer peripheral surface of the cylindrical portion 15 of the rotating shaft 12. In the bearing 20, the compressed air is blown toward the outer peripheral surface of the cylindrical portion 15 of the rotating shaft 12 by the gas supplied from a rear end surface of the rear case 42 and passing through a bearing air supply path (not illustrated) formed in the case 40 and the housing 30, in such a manner that the rotating shaft 12 is floatingly supported in a non-contact manner with respect to the housing 30. As a result, the rotating shaft 12 is supported by the radial bearing 20 in the radial direction with respect to the housing 30.

The thrust bearing 21 is a cylindrical porous member and an axial rear end surface of the thrust bearing 21 faces a front surface of the disk portion 16 of the rotating shaft 12. The thrust bearing 21 blows compressed air toward the front surface of the disk portion 16 of the rotating shaft 12 by supplying gas from a path branched from the bearing air supply path.

The magnet 50 is held by a magnet yoke 51 and the magnet yoke 51 is screwed and attached to a magnet attaching portion 34 formed inside the disk part 32 of the housing 30. Here, the magnet 50 closely faces the front side surface of the disk portion 16.

Therefore, the magnetic force of the magnet 50 pulls the disk portion 16 forward. The thrust bearing 21 generates reaction force by blowing compressed air toward the front side surface of disk portion 16 and the rotating shaft 12 is supported in the thrust direction with respect to the housing 30 by the attractive force of the magnet 50 and the reaction force of the thrust bearing 21.

As illustrated in Fig. 2, a projected area (outer diameter φd × axial length L) N of the radial bearing 20 when viewed from the radial direction of the rotating shaft 12 is set to be smaller than an area M of the thrust bearing 21 when viewed from the axial direction of the rotating shaft 12, and the axial length of the spindle device 10 is shortened. Here, the radial bearing 20 is shortened and the area M of the thrust bearing 21 is increased so that the moment load capacity is increased.

A tip surface 30a of the housing 30 is formed to be substantially flush with the tip surface 20a of the radial bearing 20 to shorten the spindle device 10 in the axial direction.

In the rear case 42, a turbine air supply path for supplying compressed air for operation to the turbine blade 11 is formed in a phase different from that of the bearing air supply path. In the rear case 42, a plurality of nozzles communicating with the turbine air supply path are formed with openings on the inner peripheral surface. Therefore, the rotating shaft 12 can obtain a predetermined rotation speed by controlling the flow rate of the air supplied to the turbine air supply path.

In the spindle device 10 configured as such, by supplying gas to the radial bearing 20 and the thrust bearing 21, the rotating shaft 12 is rotatably supported by the housing 30, and by ejecting gas from the plurality of nozzles toward the plurality of turbine blades 11, the kinetic energy of the jet flow is converted into the rotational driving force of the rotating shaft 12, in such a manner that the rotating shaft 12 is rotationally driven.

On an outer peripheral surface of the cylindrical part 31 of the housing 30, at least three (three in the embodiment) ring grooves 35 are provided and at least three (three in the present embodiment) O-rings 61, 62, and 63 are respectively arranged in these ring grooves 35. The three O-rings 61, 62, and 63 are elastically deformed and some O-rings are in contact with the inner peripheral surface of the case 40. The housing 30 and the case 40 are arranged with a gap therebetween in the radial direction.

Due to the shape of the rotating shaft, when the projected area N of the radial bearing 20 when viewed from the radial direction of the rotating shaft 12 is smaller than the area M of the thrust bearing 21 when viewed from the axial direction of the rotating shaft 12, the three O-rings 61, 62, and 63 dampen these loads and vibrations so that the vibration force due to unbalanced load or resonance is not directly transmitted to the radial bearing 20 and thrust bearing 21.

Particularly, in the axial direction of the rotating shaft 12, at least one O-ring 61 is arranged between a center C1 of the radial bearing 20 and the center of gravity G of the rotating shaft 12. As a result, when the rotating shaft 12 swings around, the load is applied to the center C1 of the radial bearing 20 and the area center C2 (radial intermediate position between the inner peripheral surface and the outer peripheral surface of the thrust bearing 21) of the thrust bearing 21. However, by arranging the O-ring 61 at a position closer to the center of gravity G of the rotating shaft 12, it becomes easier to damp the vibration, and thus the rotating shaft 12 can be stably rotated even when a large vibration is received.

The radial bearing 20 may have one or more axial arrangements. When a plurality of radial bearings 20 are provided, the center C1 of the radial bearings 20 refers to the center of the entirety of the plurality of radial bearings 20.

The O-ring 61 preferably does not overlap the center C1 of the radial bearing 20 in the axial direction of the rotating shaft 12.

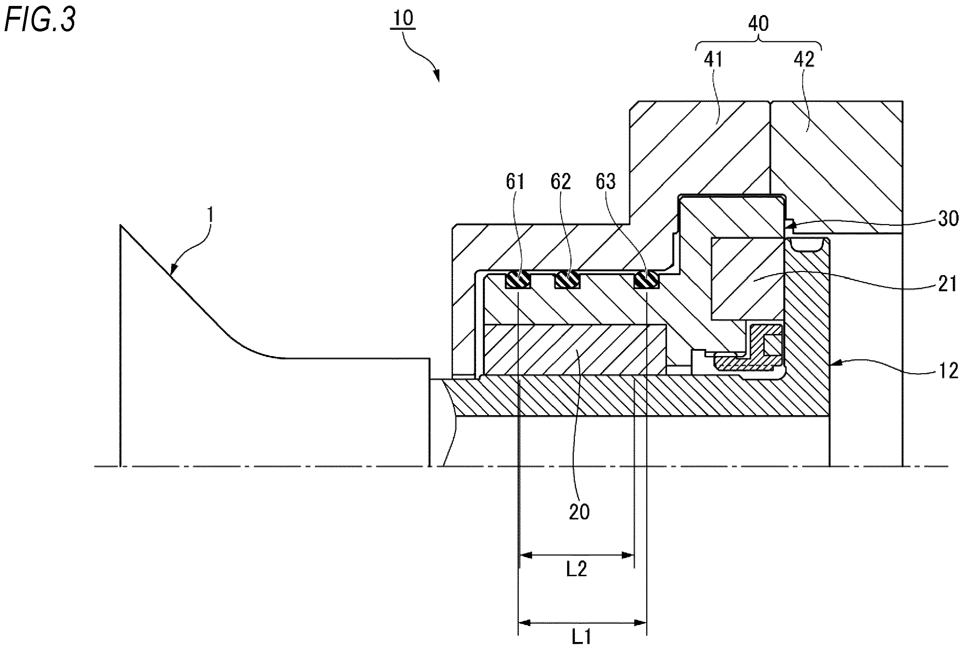

As illustrated in Fig. 3, a fulcrum distance L1 of the two O-rings 61 and 63 located at both ends in the axial direction is designed to be larger than a fulcrum distance L2 of the radial bearing 20. That is, since the spans of the O-rings 61, 62, and 63 having a large vibration damping action are formed widely, the effect of further damping the vibration can be obtained depending on the tightening condition of O-ring 61, 62, and 63.

The fulcrum of the radial bearing 20 may indicate both ends of the radial bearing or a fulcrum that actually functions as a spring element on the rigid support at the axial center of the radial bearing.

In the embodiment, it is assumed that the center of gravity G of the rotating shaft 12 is located closer to the tip side than the center C1 of the radial bearing 20 in a state where the bell cup 1 is attached. On the other hand, in a state where the bell cup 1 is not attached, when the center of gravity G of the rotating shaft 12 is located closer to the tip side than the center C1 of the radial bearing 20, even when the bell cup 1 is attached, since it is located closer to the tip side than the center C1 of the radial bearing 20, the configuration of the invention provides the same effect.

The two O-rings 62 and 63 may be arranged at arbitrary positions in the axial direction of the rotating shaft 12. When the bearing air supply path passes from the inner peripheral surface of the case 40 to the outer peripheral surface of the housing 30 between the two O-rings 61 and 62 or between the two O-rings 62 and 63, the two O-rings 61 and 62 or the two O-rings 62 and 63 can also serve as a seal for bearing air supply.

In the embodiment, as illustrated in Fig. 1, a distance B from the rear end surface of the thrust bearing 21 to the center of gravity G of the rotating shaft 12 is configured to be smaller than a diameter A of an area center C2 of the thrust bearing 21. However, in the axial direction of the rotating shaft 12, when at least one O-ring 61 is arranged between the center C of the radial bearing 20 and the center of gravity G of the rotating shaft 12, the distance B from the rear end surface of the thrust bearing 21 to the center of gravity G of the rotating shaft 12 may be large with respect to the diameter A of the area center C2 of the thrust bearing 21 and vibration can be mitigated.

The invention is not limited to the embodiment described above and can be modified, improved, and the like as appropriate.

For example, in the embodiment, the spindle device of the invention is described as being used in an electrostatic coating machine. However, the invention is not limited thereto and can be applied to a semiconductor manufacturing apparatus (wafer outer peripheral chamfering machine) and an edge deburring machine for machined products.

In the embodiment, although the thrust bearing 21 and the magnet 50 are used to support the rotating shaft 12 in the thrust direction, a plurality of gas bearings may be used to support the rotating shaft 12 in the thrust direction.

The gas bearing of the invention is not limited to the one formed of a porous member and may be another static pressure type one such as a self-made throttle. However, the gas bearing using the porous member can easily ensure the rigidity, and therefore, sufficient rigidity can be ensured even when the flow rate of the gas is low.

In particular, the embodiment is used in a state where unbalanced vibration is large at high speed rotation, and therefore, when the vibration damping effect is not large, the gas bearing, which should be provided in non-contact state, may be gnawed. Therefore, the gas bearing using the porous member is effective in preventing gnawing.

The radial bearings 20 may be divided into a plurality of parts in the axial direction and arranged side by side. In such a case, it is preferable that the plurality of radial bearings be held by one housing 30.

In the axial direction of the rotating shaft 12, when at least one O-ring 61 is arranged between the center C1 of the radial bearing 20 and the center of gravity G of the rotating shaft 12, other O-rings may be placed at arbitrary positions before and after the O-ring 61.

The present application is based on a Japanese patent application filed on February 15, 2018 (Japanese Patent Application No. 2018-24671).

### Reference Signs List

- 10:: spindle device
- 11:: turbine blade
- 12:: rotating shaft
- 20:: radial bearing
- 21:: thrust bearing
- 30:: housing
- 40:: case
- 50:: magnet
- 61, 62, 63:: O-ring

## Claims

1. A spindle device (10) comprising:
a rotating shaft (12) which has a plurality of turbine blades (11) installed in a circumferential direction and is configured to mount a mounting object on a tip;
a housing (30) which accommodates the rotating shaft (12);
a radial bearing (20) which is attached to the housing (30) and floatingly supports the rotating shaft (12) in a non-contact manner with respect to the housing (30) by supplying gas;
a thrust bearing (21) which is attached to the housing (30) and supports the rotating shaft (12) in a thrust direction with respect to the housing (30) by supplying gas;
a case (40) which is arranged to surround an outer peripheral surface of the housing (30); and
a plurality of O-rings (61, 62, 63) which are arranged between the housing (30) and the case (40) and
supports the housing (30) with respect to the case (40), wherein:
the spindle device (10) rotationally drives the rotating shaft (12) by ejecting gas to the plurality of turbine blades (11);
at least one O-ring (61, 62, 63) is arranged between a center (C1) of the radial bearing (20) and the center of gravity (G) of the rotating shaft (12) in an axial direction of the rotating shaft (12); and
**characterized in that** a projected area of the radial bearing (20) seen from a radial direction of the rotating shaft (12) is smaller than an area of the thrust bearing (21) seen from an axial direction of the rotating shaft (12).

2. The spindle device according to claim 1, wherein
the radial bearing and the thrust bearing are cylindrical porous members.

## Patentansprüche

1. Spindel-Vorrichtung (10), die umfasst:
eine rotierende Welle (12), die eine Vielzahl von Turbinenschaufeln (11) aufweist, die in einer Umfangsrichtung installiert sind, und die zum Montieren eines Montageobjektes an einer Spitze ausgeführt ist;
ein Gehäuse (30), das die rotierende Welle (12) aufnimmt;
ein Radiallager (20), das an dem Gehäuse (30) angebracht ist und die rotierende Welle (12) durch Zuführen von Gas in Bezug auf das Gehäuse (30) kontaktlos schwimmend lagert;
ein Axiallager (21), das an dem Gehäuse (30) angebracht ist und die rotierende Welle (12) durch Zuführen von Gas in einer axialen Richtung in Bezug auf das Gehäuse (30) lagert;
eine Verkleidung (40), die so angeordnet ist, dass sie eine Außenumfangsfläche des Gehäuses (30) umgibt;
sowie eine Vielzahl von O-Ringen (61, 62, 63), die zwischen dem Gehäuse (30) und der Verkleidung (40) angeordnet sind und das Gehäuse (30) in Bezug auf die Verkleidung (40) lagern,
wobei:
die Spindelvorrichtung (10) die rotierende Welle (12) durch Ausstoßen von Gas auf die Vielzahl von Turbinenschaufeln (11) rotierend antreibt;
wenigstens ein O-Ring (61, 62, 63) zwischen einer Mitte (C1) des Radiallagers (20) und dem Schwerpunkt (G) der rotierenden Welle (12) in einer axialen Richtung der rotierenden Welle (12) angeordnet ist; und
**dadurch gekennzeichnet, dass** eine projizierte Fläche des Radiallagers (20), in einer radialen Richtung der rotierenden Welle (12) gesehen, kleiner ist als eine Fläche des Axiallagers (21), in einer axialen Richtung der rotierenden Welle (12) gesehen.

2. Spindel-Vorrichtung nach Anspruch 1, wobei
das Radiallager und das Axiallager zylindrische, poröse Elemente sind.

## Revendications

1. Dispositif de broche (10) comprenant :
un axe tournant (12) qui comporte une pluralité de pales de turbine (11) installées dans la direction circonférentielle, et qui est configuré pour placer un objet de montage sur une pointe,
une enveloppe (30) qui accueille l'axe tournant (12),
un palier radial (20) qui est fixé à l'enveloppe (30) et qui supporte l'axe tournant (12) pour qu'il puisse flotter sans contact par rapport à l'enveloppe (30) en utilisant un gaz,
un palier de butée (21) qui est fixé à l'enveloppe (30) et supporte l'axe tournant (12) dans une direction de poussée par rapport à l'enveloppe (30) en utilisant un gaz,
un boîtier (40) qui est agencé pour entourer la surface périphérique externe de l'enveloppe (30), et
une pluralité de joints toriques (61, 62, 63) qui sont disposés entre l'enveloppe (30) et le boîtier (40) et qui supportent l'enveloppe (30) par rapport au boîtier (40), où :
le dispositif de broche (10) entraîne en rotation l'axe tournant (12) en projetant un gaz vers la pluralité de pales de turbine (11),
au moins un joint torique (61, 62, 63) est disposé entre le centre (C1) du palier radial (20) et le centre de gravité (G) de l'axe tournant (12) dans la direction axiale de l'axe tournant (12), et
**caractérisé en ce que** la surface projetée du palier radial (20), vue depuis une direction radiale de l'axe tournant (12), est plus petite que la surface du palier de butée (21), vue depuis la direction axiale de l'axe tournant (12) .

2. Dispositif de broche selon la revendication 1, dans lequel :
le palier radial et le palier de butée sont des éléments poreux cylindriques.
